# EUROPEAN PATENT APPLICATION

(11) **EP 2 264 878 A1**
(43) Date of publication of application: **22.12.2010**
(21) Application number: 09305566.3
(22) Date of filing: 18.06.2009
(51) Int. Cl.: H02M 3/07

(54) **DC-DC converter with control loop**

(71) Applicant: Intégration Dolphin Inc., Laval, QC H7T 1S9 (CA)
(72) Inventor: Gagnon, Yves, Owen Sound, Ontario N4K 5W4 (CA); Renaud, Mathieu, Laval, Quebec H7L 6B4 (CA); Tizu, Marius, Laval, Quebec H7L 5S3 (CA)
(74) Representative: de Beaumont, Michel

(57) **Abstract**

The invention concerns a DC-DC converter comprising: a power stage (202) comprising a plurality of switched capacitor blocks adapted to receive an input voltage (VIN), at least one switch control voltage (LCtrl) for controlling the plurality of switches and an activation signal (DCtrl), and when activated to output a voltage (VOUT) by charging and coupling said capacitors to an output node (106); first control circuitry arranged to adjust the amplitude of at least one switch control voltage based on a feedback signal (VFB) representative of the output voltage of the converter; and second control circuitry arranged to compare an input signal (CTRL), which is based on the output voltage of the converter, with at least one threshold voltage, and to generate the activation signals to activate or deactivate at least one of said switched capacitor blocks based on said comparison.

## Description

### FIELD OF THE INVENTION

The present invention relates to a DC-DC converter and method of converting a DC voltage, and in particular to a DC-DC converter having a variable output load.

### BACKGROUND OF THE INVENTION

DC-DC converters generally receive a DC supply voltage and a reference voltage and generate an output DC voltage based on the reference voltage. Switched capacitor DC-DC converters provide an output voltage that may be higher or lower than the supply voltage, depending on how the capacitors are switched.

In a switched capacitor converter, the output voltage is generated by charging one or more capacitors, known as flying capacitors, during a first phase, and then coupling the capacitors to the output terminal during a second phase.

In regulated switched capacitor converters, a regulation loop is implemented that refers to the reference voltage, and adapts the output drive current of the switched capacitor converter to the load requirements in order to maintain the output voltage at the desired value.

The performance of a regulated switched capacitor converter is usually determined by how fast and how accurately it can adapt the output drive current to the load conditions, and maintain the output voltage. On the other hand, the power conversion efficiency of a switched capacitor converter is determined by the extent of power loss in the converter. Known regulation circuits provide either high performance in terms of maintaining the output voltage over a relatively wide range of load currents, but tend to be inefficient over the load current range, or they have a reasonable efficiency for a small range of load currents, but performance is compromised.

Thus, there is a problem in providing a converter having high regulation and noise performance at the same time as good power conversion efficiency over a relatively wide range of load currents.

### SUMMARY OF THE INVENTION

It is an aim of embodiments of the present invention to at least partially address one or more problems in the prior art.

According to one aspect of the present invention, there is provided a DC-DC converter comprising a power stage comprising a plurality of switched capacitor blocks each comprising a plurality of capacitors switched by a plurality of switches, each switched capacitor block being adapted to receive an input voltage, at least one switch control voltage for controlling the plurality of switches and an activation signal, and when activated to output a voltage by charging and coupling said capacitors to an output node; first control circuitry arranged to adjust the amplitude of at least one switch control voltage based on a feedback signal representative of the output voltage of the converter; and second control circuitry arranged to compare an input signal, which is based on the output voltage of the converter, with at least one threshold voltage, and to generate the activation signals to activate or deactivate at least one of said switched capacitor blocks based on said comparison.

According to one embodiment of the present invention, the first control circuitry comprises an error amplifier arranged to generate a control signal by comparing the feedback signal with a reference voltage, and the first control circuitry is arranged to adjust the amplitude of the at least one switch control voltage based on said control signal.

According to another embodiment of the present invention, the DC-DC converter further comprises a control signals generator block arranged to generated timing signals based on a clock signal and the desired output voltage, and to generate said at least one switch control voltage based on said timing signals and said control signal.

According to another embodiment of the present invention, the input signal, which is compared to the at least one threshold, is the control signal.

According to another embodiment of the present invention, the input signal, which is compared to at least one threshold, is the feedback signal.

According to another embodiment of the present invention, each of said switches comprises a transistor having a control node coupled to receive one of the switch control voltages, the amplitude of the switch control voltage determining the conductivity of the switch.

According to another embodiment of the present invention, the second control circuitry comprises a first comparator arranged to compare the feedback voltage with a first threshold voltage and a second comparator arranged to compare the feedback voltage with a second threshold voltage.

According to another embodiment of the present invention, the first and second thresholds are automatically adjusted based on the activation signals.

According to another embodiment of the present invention, the second control circuitry comprises an N-bit counter, each of the N bits being provided as the activation signal to one of said plurality switched capacitor blocks, wherein the count value is incremented and decremented based on the comparison of the feedback voltage with the first and second threshold voltages respectively.

According to another embodiment of the present invention, the DC-DC converter further comprises a digital to analog converter arranged to generate said first and second thresholds based on the activation signals for activating or deactivating at least one of said switched capacitor blocks.

According to a further aspect of the present invention, there is provided an electronic device comprising the above DC-DC converter.

According to a further aspect of the present invention, there is provided method of converting an input DC voltage to an output DC voltage by a DC-DC converter comprising a power stage comprising a plurality of switched capacitor blocks each comprising a plurality of capacitors switched by a plurality of switches, each switched capacitor block being adapted to receive an input voltage, at least one switch control voltage for controlling the plurality of switches and an activation signal, and to output a voltage when activated by charging and coupling said capacitors to an output node, the method comprising: adjusting the amplitude of at least one of the switch control voltages based on a feedback signal representative of the output voltage of the converter; and comparing a control signal based on the output signal of the converter with at least one threshold voltage and generating the activation signal to activate or deactivate at least one of the switched capacitor blocks based on the comparison.

According to an embodiment of the present invention, comparing the output voltage with at least one threshold voltage comprises comparing the feedback voltage with high and low threshold values, and activating at least one of the switched capacitor blocks if the control signal is lower than the low threshold and deactivating at least one of the switch capacitor blocks if the feedback voltage is higher than the high threshold value.

According to another embodiment of the present invention, the method further comprises generating the high and low threshold values based on values of the activation signal to the at least one switched capacitor block.

According to an embodiment of the present invention, the method further comprises generating timing signals based on a clock signal and a desired voltage conversion of the DC-DC converter, and generating said switch control signals based on said timing signals.

### BRIEF DESCRIPTION OF THE FIGURES

The foregoing and other purposes, features, aspects and advantages of the invention will become apparent from the following detailed description of embodiments, given by way of illustration and not limitation with reference to the accompanying drawings, in which:
Figure 1 illustrates a DC-DC converter according to an embodiment of the present invention;
Figure 2 illustrates the DC-DC converter of Figure 1 in more detail according to an embodiment of the present invention;
Figure 3A illustrates a control signals generator block of Figure 2 in more detail according to an embodiment of the present invention;
Figures 3B to 3E are timing diagrams illustrating examples of signals generated in the control signal generator block of Figure 3A according to an embodiment of the present invention;
Figure 4 illustrates a power stage of the DC-DC converter of Figure 2 in more detail according to embodiments of the present invention;
Figure 5 illustrates a switched capacitor block of the power stage of Figure 4 in more detail according to an embodiment of the present invention;
Figures 6A and 6B illustrate power switch modules of the switched capacitor block of Figure 5 in more detail according to embodiments of the present invention;
Figures 7A to 7D are timing diagrams illustrating examples of signals generated in the circuit of Figure 2 according to an embodiment of the present invention; and
Figure 8 illustrates an electronic device according to embodiments of the present invention.

Throughout the figures like features have been labelled with like reference numerals.

### DETAILED DESCRIPTION OF EMBODIMENTS OF THE PRESENT INVENTION

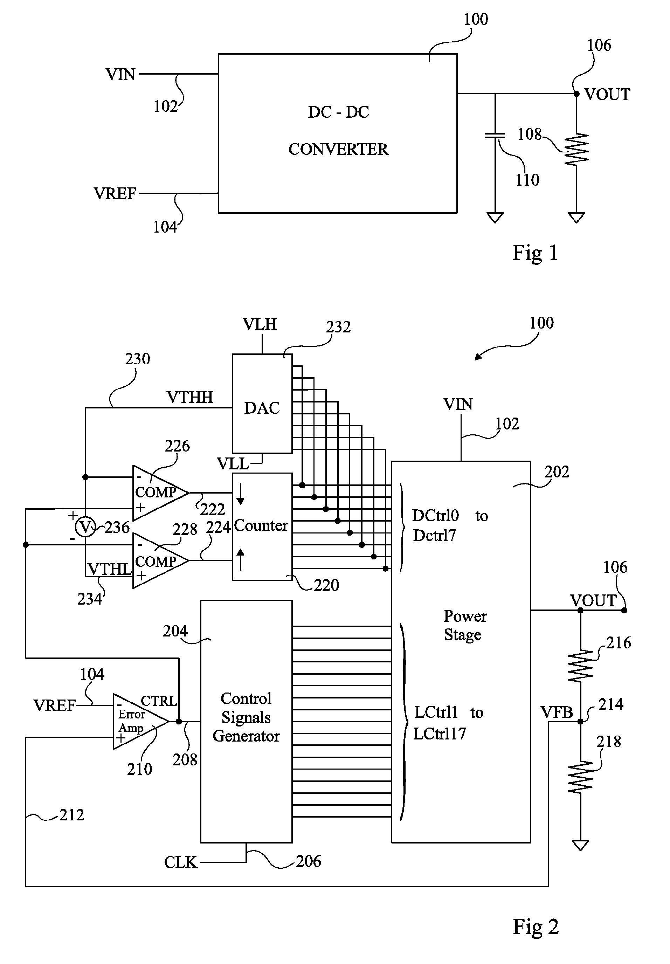

Figure 1 illustrates a DC-DC converter 100 comprising an input terminal 102 for receiving an input voltage VIN, which is for example a supply voltage of an integrated circuit, and an input terminal 104 for receiving a reference voltage VREF, equal to the desired output voltage VOUT of the DC-DC converter, or to a fraction thereof. The output voltage VOUT of the DC-DC converter 100 provided at an output terminal 106 is regulated based on the reference voltage VREF, and supplies a load 108. Load 108 is represented as a resistor coupled to ground in Figure 1, but in practice the load could additionally comprise capacitive elements and/or active analog or digital circuits. An output capacitor 110 is also for example provided.

The input voltage VIN is for example a supply voltage from a power source such as a battery or AC-DC converter, and is for example between 0.3 and 6.5 V. The output voltage VOUT is for example chosen to be at a voltage of between 100 mV and 20 V. The reference voltage VREF is for example equal to the desired output voltage, or at a fixed ratio of the desired voltage, for example between 10 and 99 percent thereof.

Figure 2 illustrates the DC-DC converter 100 in more detail. As illustrated, converter 100 comprises a power stage 202, which receives the input voltage VIN on input terminal 102, and provides the output voltage VOUT on output terminal 106. In the example of Figure 2, the power stage 202 is controlled by eight digital control signals DCtrl0 to DCtrl7, and also seventeen analog control signals LCtrl1 to LCtrl17. The digital control signals DCtrl0 to DCtrl7 are activation signals used to activate one or more switched capacitor blocks of the power stage (not shown in Figure 2). The analog control signals LCtrl1 to LCtrl17 are switch control signals used to control seventeen corresponding switches in each of the switched capacitor blocks of the power stage 202. The same switch control signals are for example provided to each switched capacitor block. The number of activation signals will depend on the number of switched capacitor blocks, while the number of switch control signals will depend in the number of switches in each switched capacitor block. In the embodiment of Figure 2, the switches of each switched capacitor block are low activated, for example being implemented by P-channel MOS transistors.

Switch control signals LCtrl1 to LCtrl17 are provided by a control signals generator block 204. Block 204 receives a clock signal at an input terminal 206, and generates the switch control signals based on a control signal CTRL received on an input line 208, provided by the output of an error amplifier 210. Control signal CTRL is based on a comparison between the input reference voltage VREF at input terminal 104 coupled to the negative input of the error amplifier 210, and a feedback voltage VFB received on a feedback line 212 coupled to the positive input terminal of the error amplifier 210, and will converge to a value that results in the feedback voltage VFB being equal to the reference voltage VREF.

Feedback line 212 is coupled to the output of the DC-DC converter, and in this example to a node 214 of a voltage divider comprising a resistor 216 coupled between the output terminal 106 and node 214, and a resistor 218 coupled between node 214 and ground.

The activation signals DCtrl0 to DCtrl7 are generated by a counter 220, which is for example an 8-bit counter, controlled to count down by an input signal received on an input line 222 and to count up by an input signal received on an input line 224. Line 222 is coupled to the output of a comparator 226, while line 224 is coupled to the output of a comparator 228.

Comparator 226 has its positive input terminal coupled to line 208 for receiving the control signal CTRL, and its negative input terminal coupled to a line 230, which is coupled to the output of a digital to analogue converter (DAC) 232. DAC 232 is controlled by the 8-bit output of counter 220, and generates a voltage based on the values of DCtrl0 to DCtrl7 and reference voltage limits VLL and VLH. For example, when the 8-bit number defined by the activation signals DCtrl[7..0] is equal to zero (i.e."00000000"), the output of DAC 232 is for example equal to voltage limit VLH. On the other hand, when the 8-bit number defined by activation signals DCtrl[7..0] is equal to 255, (i.e."11111111"), the output of the DAC 232 is for example equal to voltage limit VLL. Between these two limits, the relationship between the activation signals DCtrl[7..0] and output of the DAC 232 is for example linear. Voltage limit VLL is for example a value equal to between 10% and 50% of VLH. For example, voltage VLH is between 0.6 and 0.8 V, while voltage VLL is between 0.2 and 0.5 V.

Comparator 228 has its negative input terminal coupled to line 208 for receiving control signal CTRL, and its positive input terminal coupled to an input line 234, which is coupled to a voltage differential 236, coupled between lines 230 and 234. The voltage differential 236 reduces the output voltage of the DAC 232 on line 230 by a fixed voltage value, for example by between 100 mV and 1 V.

Given that the switches of the switched capacitor blocks of the power stage are low activated in this example, the output of the comparator will increase when the feedback voltage increases, and decrease when the feedback voltage falls.

In the case that the switches of the switched capacitor blocks of the power stage 202 are high activated, for example if they are implemented by N-channel MOS transistors, the reference voltage VREF is still coupled to the negative input terminal of the error amplifier 210, and the feedback voltage VFB is still coupled to the positive input terminal of the error amplifier 210. However, in this case, the counter 220 counts up when the output of comparator 226 is high, and counts down when the output of comparator 228 is high. Furthermore, when the 8-bit number defined by the activation signals DCtrl[7..0] is equal to zero (i.e."00000000"), the output of DAC 232 is for example equal to voltage limit VLL, while when the 8-bit number defined by activation signals DCtrl[7..0] is equal to 255, (i.e."11111111"), the output of the DAC 232 is for example equal to voltage limit VLH.

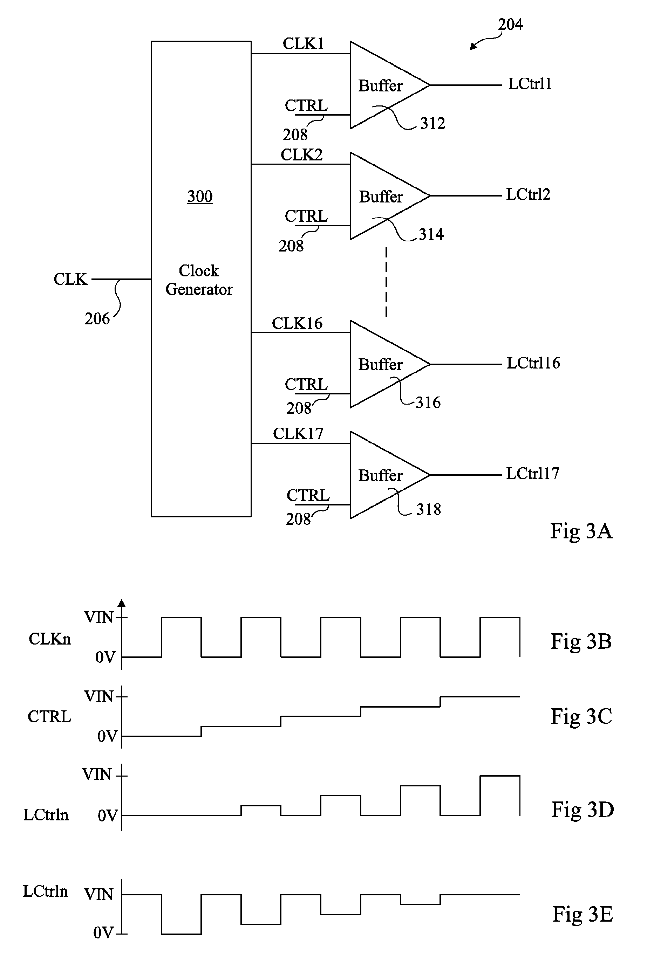

Figure 3A illustrates the control signals generator block 204 of Figure 2 in more detail. Block 204 comprises a clock generator 300, which receives the clock signal CLK on line 206 and based on this clock signal and the desired voltage conversion, generates timing signals CLK1 to CLK17. The timing signals CLK1 to CLK17 are provided to respective buffers, of which four are shown in Figure 3 labelled 312, 314, 316 and 318. The buffers also receive, on an input line 208, the control signal CTRL generated by the error amplifier of Figure 2. The buffers amplify the timing signals CLK1 to CLK17 to a level determined by the control signal CTRL to generate the switch control signals LCtrl1 to LCtrl17 respectively.

Figures 3B to 3E are timing diagrams showing an example of signals of the control signal generator 204 of Figure 3A.

Figure 3B shows one example of a clock signal CLKn, which is one of the clock signals CLK1 to CLK17, generated by the clock generator 300. Clock signal CLKn is for example a square wave having an amplitude of VIN. This square wave for example has a frequency within the range 100 kHz to 10 MHz. Depending on the desired voltage conversion of the DC-DC converter, the timing of the other clock signals will for example vary with respect to CLKn.

Figure 3C shows an example of the control signal CTRL at the output of the error amplifier 210, in this example progressively increasing.

Figure 3D and 3E illustrate examples of switch control signals LCtrln generated based on signals CLKn and CTRL for switches of the switched capacitor blocks. Figure 3D applies to the case that the switches are an N-channel MOS transistors and Figure 3E to the case that the switches are a P-channel MOS transistors.

As shown in Figure 3D, when the signal CTRL is low, for example at 0 V, the switch control signal LCtrln has zero amplitude, and in this example stays at 0 V. Then, as the control signal CTRL increases, the amplitude of the switch control signal LCtrln also increases, and for example each positive pulse of the switch control signal LCtrln has an amplitude equal to the corresponding value of the signal CTRL, to a maximum voltage of VIN.

As shown in Figure 3E, when the signal CTRL is low, for example at 0 V, the switch control signal LCtrln initially has an amplitude of VIN. As the signal CTRL increases, the amplitude of the switch control signal LCtrln below VIN decreases until the voltage is constantly at VIN with zero amplitude.

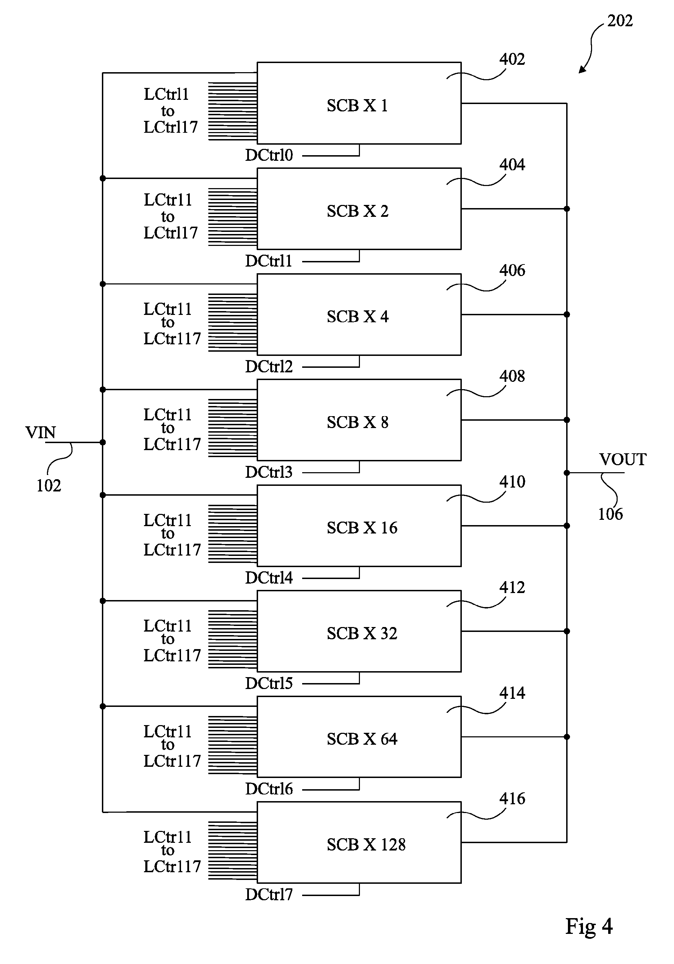

Figure 4 illustrates the power stage 202 of Figure 2 in more detail according to one embodiment. The input line 102, which receives the input voltage VIN, is coupled in this example to eight switched capacitor blocks (SCBs) 402 to 416. SCB 402 is the smallest of the SCBs, for example comprising capacitors and/or switches of the smallest size. Thus SCB 402 has the smallest output capacity. The output capacity of each of the other SCBs 404 to 416 for example increases by a magnitude of two for each SCB. Thus, the size of the capacitors and/or switches, and therefore the output capacity of SCB 404, is for example twice that of SCB 402, the output capacity of SCB 406 four times that of SCB 402, etc. and finally the output capacity of SCB 416 is 128 times that of SCB 402.

As illustrated, each of the SCBs 402 to 416 receives all of the switch control signals LCtrl1 to LCtrl17, and a respective one of the activation signals DCtrl0 to DCtrl7. By activating different combinations of SCBs, a total of 256 different output capacity levels of the DC-DC converter may be selected. The outputs from the SCBs 402 to 416 are all coupled to the same output line 106, such that the overall output capacity of the power stage 202 is the sum of all of the activated SCBs 402 to 416.

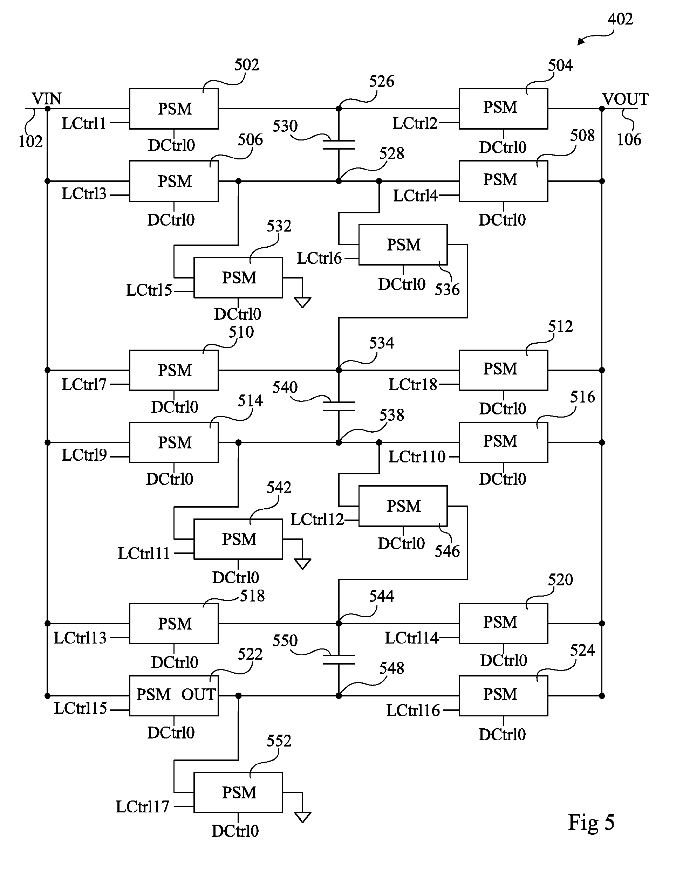

Figure 5 illustrates the SCB 402 of Figure 4 in more detail according to one example. The other SCBs 404 to 416 for example comprise an identical arrangement of switches and capacitors to those of SCB 402, although the components may be of different sizes.

The SCB 402 comprises seventeen switches shown as power switch modules (PSMs) in Figure 5. Each PSM is a module having main current terminals via which it is coupled in the circuit, an input for receiving a respective one of the switch control signals LCtrl1 to LCtrl17, and an input for receiving the activation signal DCtrl0.

SCB 402 comprises PSMs 502 and 504 coupled in series between the input terminal 102 and the output terminal 106. SCB 402 further comprises series coupled PSMs 506 and 508, 510 and 512, 514 and 516, 518 and 520 and 522 and 524, each pair being coupled in parallel between the input terminal 102 and the output terminal 106. A node 526 between the PSMs 502 and 504 is coupled to a node 528 between PSMs 506 and 508 by a capacitor 530. Node 528 is further coupled to ground via a PSM 532, and to further node 534 via a PSM 536. Node 534 is coupled to a further node 538 between PSMs 514 and 516 by a capacitor 540. Node 538 is further coupled to ground via a PSM 542, and to a further node 544 by a PSM 546. Node 544, which is between PSM 518 and 520, is further coupled to node 548 between PSMs 522 and 524 by a capacitor 550. Node 548 is also coupled to ground via a PSM 552.

When activated by the activation signal DCtrl0, the PSMs of the switched capacitor block 402 can be controlled by the timing and amplitude of the switch control signals LCtrl1 to LCtrl17 to provide a desired voltage conversion. Generally, there are two phases, although some conversion ratios may use four or more different phases. Assuming two phases, during the first phase, one or more of the capacitors are charged by the input voltage VIN, and during the second phase the charged capacitors are coupled to the output node of the SCB 402 to provide the output voltage VOUT. Based on the timing of the switch control signals, a gain may be applied to the input voltage VIN to approximately provide any of the following gain ratios: 8, 7, 6, 5, 4, 3, 5/2, 2, 5/3, 3/2, 4/3, 1, 3/4, 2/3, 3/5, 1/2, 2/5, 1/3, 1/4, 1/5, 1/6, 1/7 and 1/8.

For example, to multiply the input voltage VIN by a factor of 1/4, during a first half period, signals LCtrl1, LCtrl6, LCtrl12 and LCtrl16 turn on PSMs 502, 536, 546 and 524, and the other LCtrl signals turn the other PSMs off. This couples capacitors 530, 540, and 550 in series between the input node 102 and the output node 106 of SCB 402. During a second half period, signals LCtrl2, LCtrl5, LCtrl8, LCtrl11, LCtrl14 and LCtrl17 turn on PSMs 504, 532, 512, 542, 520 and 552, and the other signals turn the other PSMs off. This couples each of the capacitors 530, 540 and 550 in parallel between the output node 106 and the ground reference.

At the same time, the amplitude of the switch control signals LCtrl1 to LCtrl17 can be adjusted to provide a fine-tuned gain, based on the control signal CTRL from error amplifier 210 of Figure 2.

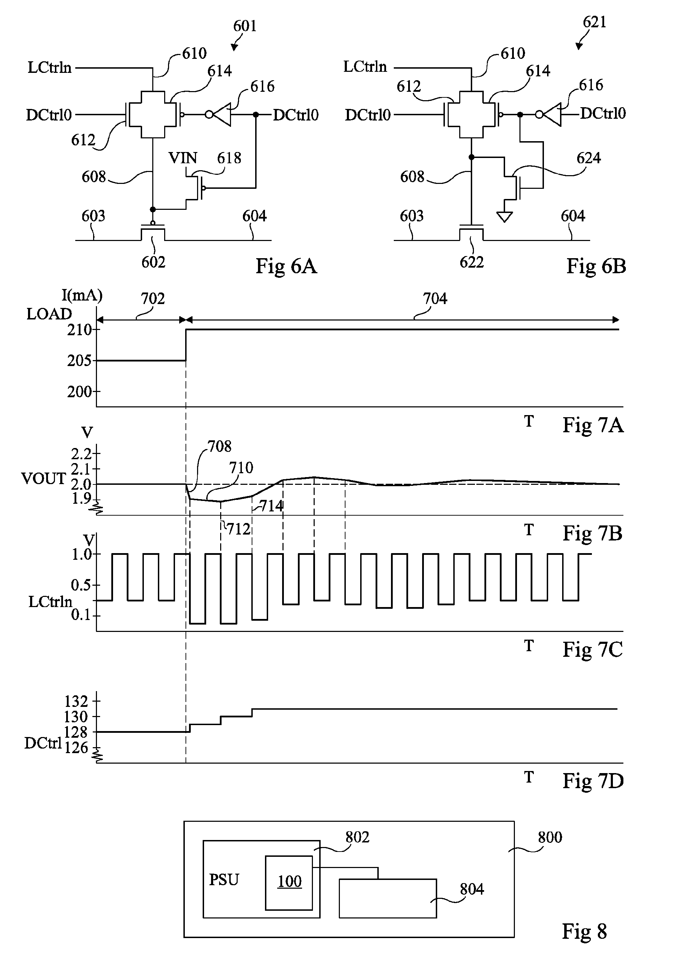

Figures 6A and 6B illustrate alternative examples 601 and 621 of the power switch modules 502 to 508, 510 to 516, 518 to 524, 532, 536, 542, 546 and 552 of Figure 5.

PSM 601 of Figure 6A illustrates the case that the main switch is a P-channel MOS transistor 602. Transistor 602 has source/drain nodes coupled to nodes 603 and 604, these nodes providing the main current terminals of the module. The gate node of transistor 602 is coupled by a line 608 to a line 610 via an N-channel transistor 612 and a P-channel transistor 614. Line 610 receives one of the switch control signals LCtrln corresponding to this PSM. The gate node of transistor 612 receives the activation signal DCtrl0. The gate node of transistor 614 is coupled to the activation signal DCtrl0 via an inverter 616. The gate node of transistor 602 is also coupled to the input voltage VIN by a P-channel MOS transistor 618, which has its gate node coupled to the activation signal DCtrl0.

In operation, while the activation signal DCtrl0 is low, the gate node of transistor 602 is coupled to the voltage VIN, and the PSM 601 is thus deactivated. When the activation signal DCtrl0 is high, the gate node of transistor 602 receives the switch control signal LCtrl, and thus is switched based on this signal.

PSM 621 of Figure 6B illustrates the case that the main transistor is an N-channel MOS transistor 622, replacing the P-channel transistor 602. P-channel MOS transistor 618 is also replaced by an N-channel MOS transistor 624, which is coupled between line 608 and ground, and has its gate node coupled to the output of inverter 616. Operation of the circuit of Figure 6B is equivalent to that of Figure 6A.

Operation of the DC-DC converter of Figure 2 will now be described with reference to the timing diagrams of Figures 7A to 7D. In this embodiment the switches of the switched capacitor blocks are PMOS transistors, and it will be apparent to those skilled in the art that equivalent operation can be achieved when the switches are NMOS transistors.

Figure 7A illustrates an example of the load current drawn from the DC-DC converter 100. In this example, it is assumed that during consecutive phases 702 and 704, the load current is at 205 mA and 210 mA respectively.

Figure 7B illustrates an example of fluctuations of the output voltage VOUT of the DC-DC converter 100. It is assumed that the desired output voltage is 2 V, and VREF is for example at 1.2 V.

Figure 7C illustrates an example of one of the switch control signals LCtrln, which is based on the control signal CTRL at the output of the error amplifier 210 of Figure 2. While their timing may be different, the amplitudes of the other switch control signals LCtrl are for example the same as LCtrln. Voltage VIN is at 1 V.

Figure 7D illustrates an example of the count value of the activation signals DCtrl. In other words, assuming an 8-bit counter 220, the count value will be between 0 when all bits of DCtrl are low and 255 when all the bits are high. In the example of Figure 7D, the count value is between 128 and 131.

During the first phase 702, the output voltage is stable at 2 V, and thus the feedback voltage is stable at 1.2 V, the control signal CTRL is stable at 0.3 V, and the count value DCtrl is stable at 128, meaning that the SCB 416 of Figure 4 is alone activated.

At the start of the second phase 704, a sudden increase in load current is demanded, for example because inactive circuitry has been activated. This causes a steep drop in the output voltage VOUT, as shown in Figure 7B labelled 708. The feedback voltage VFB on line 212 thus falls rapidly below the threshold of 1.2 V. This causes signal CTRL to drop.

With the count value at 128, and assuming voltages VLH and VLL equal to 0.8 V and 0.2 V respectively, the high threshold VTHH is for example equal to 0.5 V. Assuming that voltage difference 236 is equal to 0.4 V, the low threshold VTHL is thus equal to 0.1 V. The control signal CTRL falls below the low threshold, and thus the count value of the activation signals DCtrl is incremented by one, to 129. In other words, switched capacitor blocks 402 and 416 of Figure 4 are activated. The change in the count value of signal DCtrl decreases the high and low thresholds VTHH and VTHL each by around 2 mV.

The activation signals DCtrl[0..7] are for example refreshed periodically, at the frequency of counter 220, which is for example between 10 and 100 percent of the switching frequency of the DC-DC converter. The switch control signals LCtrl are for example refreshed in real time, but changes only affect active parts of the pulse.

At the subsequent falling edge of the switch control signal LCtrln, shown by a dashed line 712 in Figure 7B, the output voltage VOUT, and thus the feedback voltage VFB is still low, and thus control signal CTRL is still below the low threshold VTHL. The count value of the activation signals DCtrl is therefore incremented again, to 130. This corresponds to deactivating SCB 402, and activating SCB 404 of Figure 4.

At the next falling edge 714 of the switch control signal LCtrln, the output voltage VOUT has started to rise, and the control signal CTRL is above the low threshold VTHL. Thus no increment of signal DCtrl is implemented. Subsequently, VOUT approaches the desired value of 2 V, and stays within the high and low thresholds VTHH, VTHL, so that the count value DCtrl stays constant at 130. The value of the switch control signal LCtrln is adjusted until the output voltage becomes stable close to the desired output voltage.

According to this example, when for example the output load of the DC converter is very low, the count value of the activation signals DCtrl is low, for example close to zero. Due to the DAC 232, the corresponding threshold values VTHL and VTHH are relatively high, for example 0.4 and 0.8 V respectively. On the other hand, when the output load is very high, the count value of activation signals DCtrl is high, for example close to 255. Due to the DAC 232, the corresponding threshold values VTHL and VTHH are relatively low, for example -0.2 and 0.2 V respectively. The thresholds VTHL and VTHH are thus adapted such that the switch control voltage to each of the PMOS transistors of the power switch modules converges to high values when a low load is present, such that the switches are less conductive, and the switch control voltage converges to low values when a high load is present, such that the switches become more conductive.

Figure 8 illustrates an electronic device 800 comprising a power supply unit 802 comprising the DC-DC converter 100 of Figure 2. The output of the DC-DC converter is coupled to circuitry 804, which for example comprises one or more processors, memory devices, and/or other logic. The PSU 802 is for example integrated on an integrated circuit chip, and the circuitry 804 integrated on a same or different integrated circuit chip. The output capacitor 110 of the DC-DC converter and/or the flying capacitors 530, 540, 550 of the switched capacitor blocks may be positioned on chip or off chip.

Electronic device 800 is any device requiring a DC voltage converter, and could for example be a mobile telephone, smart phone, portable media device, personal or laptop computer, games console, digital camera, or other device.

An advantage of the DC-DC converter described herein is that by providing a plurality of switched capacitor blocks that can be activated or deactivated based on the output load requirements, operating efficiency is greatly improved. In particular, losses in a DC-DC converter are proportional to the size of the switched capacitor blocks that are activated. By allowing activation or deactivation of switched capacitor blocks based on the load requirements, efficiency can be maintained even when the load is low.

Furthermore, fine tuning of the output voltage is provided by adjusting the amplitude of switch control signals to the switches of the switched capacitor blocks, thereby adjusting the conductivity of the switches. Thus small fluctuations in the output load leading to fluctuations in the output voltage VOUT are regulated by adjusting the switch control signals, while larger fluctuations in the output voltage VOUT are also regulated by activating or deactivating switched capacitor blocks.

Furthermore, by using switched capacitor blocks increasing in size by a power of 2, a simple counter can be used to activate and deactivate the switched capacitor blocks, resulting in relatively linear increments of the output current, and a wide selectable range of output currents.

Whereas a number of specific embodiments of the present invention have been described, it will be apparent of those skilled in the art that there are numerous variations and alternatives that can be applied.

For example, while in the embodiment of Figure 2 the comparators 226 and 228 receive the control signal CTRL from the error amplifier 210, in alternative embodiments they could receive an alternative signal, for example received from a separate amplifier or comparator, also receiving the feedback voltage. In this case the thresholds VTHH and VTHL will be adapted accordingly, for example by choosing appropriate values for VLL and VLH.

While the activation signals DCtrl[0..7] have been described as being generated by a counter 220, other implementations are possible. Furthermore, while the thresholds VTHH and VTHL can be generated based on an analogue conversion of the output of the counter 220, in other embodiments the thresholds could be fixed. Furthermore, while the spacing between the threshold voltages provided by voltage difference 236 is fixed, in alternative embodiments it could vary based on the output of the counter, such that the range VTHH-VTHL is larger when less switched capacitor blocks are activated, and smaller when more switched capacitor blocks are activated. This can be advantageous as a given change in the output load is likely to have a greater impact on the output voltage VOUT if fewer switched capacitor blocks are active than if more switched capacitor blocks are active.

Furthermore, while the present invention has been described in relation to the use of MOS transistors as the switches of the switched capacitor blocks, in alternative embodiments any transistors controlled by the amplitude of a control signal may be used.

While an example having 8 switched capacitor blocks of sizes increasing by a power 2 has been described, in alternative embodiments between 2 and 16 switched capacitor blocks and corresponding activation signals DCtrl could be provided. Alternatively, in the case that the switched capacitor blocks have sizes increasing linearly, between 2 and several hundred switched capacitor blocks and a corresponding number of activation signals DCtrl could be provided.

Furthermore, while an example has been given wherein the switched capacitor blocks comprise seventeen power switch modules controlled by seventeen switch control signals, in alternative embodiments other circuit arrangements are possible, with more or less power switch modules, corresponding control signals, and flying capacitors.

Furthermore, while each power switch module of a switched capacitor block is described as being deactivated by transistors 612, 614 and 618/624 of Figures 6A and 6B, in alternative, the switched capacitor block could be deactivated by transistors coupled to the input and output lines 102, 106 of each switched capacitor block of Figure 5, or by a different arrangement. An advantage of the solution described herein is that when activated, no activation transistor is coupled directly between the input and output of the switched capacitor block, avoiding a drop in the voltage.

## Claims

1. A DC-DC converter comprising:
a power stage (202) comprising a plurality of switched capacitor blocks (402 to 416) each comprising a plurality of capacitors (530, 540, 550) switched by a plurality of switches (502 to 552), each switched capacitor block being adapted to receive an input voltage (VIN), at least one switch control voltage (LCtrl) for controlling the plurality of switches and an activation signal (DCtrl), and when activated to output a voltage (VOUT) by charging and coupling said capacitors to an output node (106);
first control circuitry (204, 210) arranged to adjust the amplitude of at least one switch control voltage based on a feedback signal (VFB) representative of the output voltage of the converter; and
second control circuitry (220, 226, 228, 232) arranged to compare an input signal (CTRL), which is based on the output voltage of the converter, with at least one threshold voltage (VTHH, VTHL), and to generate the activation signals to activate or deactivate at least one of said switched capacitor blocks based on said comparison.

2. The DC-DC converter of claim 1, wherein the first control circuitry comprises an error amplifier (210) arranged to generate a control signal by comparing the feedback signal with a reference voltage, and the first control circuitry is arranged to adjust the amplitude of the at least one switch control voltage based on said control signal.

3. The DC-DC converter of claim 2, further comprising a control signals generator block (204) arranged to generated timing signals (CLK1 to CLK17) based on a clock signal (CLK) and the desired output voltage, and to generate said at least one switch control voltage based on said timing signals and said control signal.

4. The DC-DC converter of claim 2 or 3, wherein said input signal, which is compared to the at least one threshold, is the control signal.

5. The DC-DC converter of claim 2 or 3, wherein said input signal, which is compared to at least one threshold, is the feedback signal.

6. The DC-DC converter of any of claims 1 to 5, wherein each of said switches comprises a transistor (606, 720) having a control node coupled to receive one of the switch control voltages, the amplitude of the switch control voltage determining the conductivity of the switch.

7. The DC-DC converter of any of claims 1 or 6, wherein the second control circuitry comprises a first comparator (226) arranged to compare the feedback voltage with a first threshold voltage (VTHH) and a second comparator (224) arranged to compare the feedback voltage with a second threshold voltage (VTHL).

8. The DC-DC converter of claim 7, wherein the first and second thresholds are automatically adjusted based on the activation signals.

9. The DC-DC converter of claim 7 or 8, wherein the second control circuitry comprises an N-bit counter (220), each of the N bits being provided as the activation signal to one of said plurality switched capacitor blocks, wherein the count value is incremented and decremented based on the comparison of the feedback voltage with the first and second threshold voltages respectively.

10. The DC-DC converter of any of claims 7 to 9, further comprising a digital to analog converter (232) arranged to generate said first and second thresholds based on the activation signals for activating or deactivating at least one of said switched capacitor blocks.

11. An electronic device comprising the DC-DC converter of any of claims 1 to 10.

12. A method of converting an input DC voltage (VIN) to an output DC voltage (VOUT) by a DC-DC converter comprising a power stage (202) comprising a plurality of switched capacitor blocks (402 to 416) each comprising a plurality of capacitors (530, 540, 550) switched by a plurality of switches (502 to 552), each switched capacitor block being adapted to receive an input voltage (VIN), at least one switch control voltage (LCtrl) for controlling the plurality of switches and an activation signal (DCtrl), and to output a voltage (VOUT) when activated by charging and coupling said capacitors to an output node (106), the method comprising:
adjusting the amplitude of at least one of the switch control voltages based on a feedback signal representative of the output voltage of the converter; and
comparing a control signal (CTRL) based on the output signal of the converter with at least one threshold voltage (VTHH, VTHL) and generating the activation signal to activate or deactivate at least one of the switched capacitor blocks based on the comparison.

13. The method of claim 12, wherein comparing the output voltage with at least one threshold voltage comprises comparing the feedback voltage with high and low threshold values, and activating at least one of the switched capacitor blocks if the control signal is lower than the low threshold and deactivating at least one of the switch capacitor blocks if the feedback voltage is higher than the high threshold value.

14. The method of claim 13, further comprising generating the high and low threshold values based on values of the activation signal to the at least one switched capacitor block.

15. The method of any of claims 12 to 14, further comprising generating timing signals (CLK1 to CLK17) based on a clock signal (CLK) and a desired voltage conversion of the DC-DC converter, and generating said switch control signals based on said timing signals.
